# EUROPÄISCHE PATENTSCHRIFT

(11) **EP 3 243 559 B1**
(45) Veröffentlichungstag und Bekanntmachung des Hinweises auf die Patenterteilung: **25.09.2019**
(21) Anmeldenummer: 17170646.8
(22) Anmeldetag: 11.05.2017
(51) Int. Cl.: B01D 35/30, B01D 27/08, B01D 27/14

(54) **FILTERANORDNUNG**
FILTER ASSEMBLY
SYSTÈME DE FILTRE

(30) Priorität: 13.05.2016 DE 102016208354
(43) Veröffentlichungstag der Anmeldung: 15.11.2017
(73) Patentinhaber: Deere & Company, Moline, IL 61265 (US)
(72) Erfinder: Dengler, Marcos, 68163 Mannheim (DE); Schneider, Alexandre, 68163 Mannheim (DE)
(74) Vertreter: Dehnhardt, Florian Christopher

(56) Entgegenhaltungen:
- DE-A1- 3 739 614
- DE-U1-202011 005 359
- KR-B1- 101 591 007
- US-A- 4 552 662

## Beschreibung

Die Erfindung betrifft eine Filteranordnung mit den Merkmalen des Oberbegriffs des Patentanspruches 1.

Aus DE 37 39 614 A1 ist eine Filteranordnung mit zwei Filterpatronen bekannt. Diese Filteranordnung ist an einer Anschlussschnittstelle eines Vorratsbehälters für Kraftstoff und an einer Anschlussschnittstelle eines stationären Dieselmotors fluidisch angeschlossen. Hierbei weist ein Sockelteil der Filteranordnung einen Einlass und einen Auslass auf, welche jeweils als Anschlussbuchse für gesondert zu verlegende Kraftstoffleitungen ausgebildet sind. Das Sockelteil enthält eine Vielzahl von Kanälen, welche den Einlass und den Auslass mit den Filterpatronen fluidisch verbinden.

Das Dokument DE 37 39 614 A1 offenbart einen Kraftstoff-Doppelfilter, mit einem Kraftstoff-Einlaß und einem Kraftstoff-Auslaß, mit zwei Filterpatronen und mit einem Umschaltventil, durch welches mittels Verdrehen eines Hahnkükens der Kraftstoff-Einlaß und der Kraftstoff-Auslaß mit der einen oder mit der anderen Filterpatrone in Strömungsverbindung bringbar sind

Die Filteranordnung des Dokuments US 4 552 662 weist einen Anschlussbasis auf, um das Anbringen mehrere Kraftstofffilterbehälter an einem Verbrennungsmotor zu ermöglichen.

Der vorliegenden Erfindung liegt die Aufgabe zugrunde, eine bezüglich ihres Gebrauchsnutzens verbesserte Konstruktion einer Filteranordnung anzugeben.

Diese Aufgabe wird gemäß den Merkmalen des Patentanspruchs 1 gelöst.

Die Filteranordnung dient dem fluidischen Anschluss an eine Funktionsschnittstelle, welche insbesondere die Schnittstelle einer technischen Vorrichtung (z.B. einer Kraftstoff-Pumpe) ist. Die Filteranordnung weist eine Anschlussbasis mit einem Basiseinlass und einem Basisauslass auf. Der Basiseinlass ist mit Zuleitungskanälen fluidisch verbunden, um das Fluid (z.B. Kraftstoff) von der Funktionsschnittstelle zu Patroneneinlässen mindestens zweier Filterpatronen zu leiten. Der Basisauslass ist mit Ableitungskanälen fluidisch verbunden, um das gefilterte Fluid von Patronenauslässen der Filterpatronen zu dem Basisauslass zu leiten.

Die Anschlussbasis mit dem Basiseinlass und dem Basisauslass weist eine fluidische Anschlussstruktur auf, welche der Anschlussstruktur der Filterpatrone mit dem Patroneneinlass und dem Patronenauslass entspricht. Diese Entsprechung ist derart, dass an der zugeordneten Funktionsschnittstelle wahlweise (d.h. gegeneinander austauschbar) entweder die Anschlussbasis oder eine einzelne Filterpatrone fluidisch anschließbar ist.

Vorzugsweise sind der Basiseinlass und der Basisauslass der Anschlussbasis im Verhältnis zu dem Patroneneinlass und dem Patronenauslass einer Filterpatrone ähnlich oder identisch dimensioniert. Dies gilt zumindest abschnittsweise, z.B. entlang einer Axialrichtung der Filterpatrone und der Anschlussbasis und/oder quer zu dieser Axialrichtung.

Insbesondere ist die geometrisch-konstruktive Dimensionierung der Anschlussbasis und einer Filterpatrone hinsichtlich ihrer fluidischen Anschlüsse derart aufeinander abgestimmt, dass der Basiseinlass sowie Basisauslass einerseits und der Patroneneinlass sowie Patronenauslass andererseits zumindest teilweise identische geometrische Abmessungen aufweisen.

Eine einzelne Filterpatrone an der Funktionsschnittstelle ist also bedarfsweise gegen die Anschlussbasis mit mehreren Filterpatronen austauschbar. Mit anderen Worten ist die geometrisch-konstruktive Dimensionierung der Anschlussbasis und einer Filterpatrone hinsichtlich ihrer fluidischen Anschlüsse derart aufeinander abgestimmt, dass ohne zusätzliche kostenaufwändige technisch-konstruktive Anpassungen entweder eine einzelne Filterpatrone oder die Anschlussbasis mit mindestens zwei Filterpatronen an dieselbe Funktionsschnittstelle fluidisch anschließbar ist.

Eine Filteranordnung mit einer derartigen Anschlussbasis ermöglicht einem Benutzer flexiblere Möglichkeiten zur Filterung des Fluids je nach Erfordernis und spezifischem Anwendungsfall. Beispielsweise lässt sich bei Bedarf - im Vergleich zum Einsatz einer einzelnen Filterpatrone - mittels der Anschlussbasis die Kapazität der Filterung ohne zusätzliche technische Maßnahmen erhöhen. Hierdurch kann in vielen Anwendungsfällen die Effizienz und Leistung der Filterfunktion gesteigert werden, ohne dass andere, entsprechend teurere Typen von Filterpatronen bereitgestellt werden müssen. Diese flexibleren Möglichkeiten zur Filterung sind mit einem einzigen herkömmlichen Typ einer Filterpatrone und der Anschlussbasis möglich.

Die Anschlussbasis wirkt als Adapter zwischen den Filterpatronen und der Funktionsschnittstelle. Mittels dieses Adapters können mindestens zwei Filterpatronen - anstatt herkömmlich nur eine Filterpatrone - an dieselbe Funktionsschnittstelle fluidisch angeschlossen werden. Je nach Ausgestaltung der Anschlussbasis können nach demselben Prinzip auch mehr als zwei Filterpatronen gleichzeitig mit der Funktionsschnittstelle fluidisch verbunden werden.

Es sei angemerkt, dass die Erwähnung eines Basisauslasses oder Patronenauslasses auch eine Variante mit mehreren (insbesondere zwei) solcher Öffnungen bzw. Auslässen einschließt. Gleiches gilt für die Erwähnung eines Basiseinlasses oder Patroneneinlasses.

Der Basiseinlass ist der Eingang oder zumindest ein Bestandteil eines zentralen Zuleitungsabschnittes der Anschlussbasis, welcher in mindestens zwei abzweigende Zuleitungskanäle mündet. Insbesondere ist jedem Zuleitungskanal eine Filterpatrone zugeordnet. Diese Ausgestaltung der Anschlussbasis schafft die Voraussetzung für einen raumsparenden, kompakten Aufbau der gesamten Filteranordnung, so dass sie auch bei besonders beengten Raumverhältnissen im Bereich einer Funktionsschnittstelle einsetzbar ist.

Insbesondere sind der zentrale Zuleitungsabschnitt und zwei abzweigende Zuleitungskanäle nach Art eines Y-Verteilers angeordnet. Dies unterstützt den gewünschten kompakten Aufbau der Filteranordnung durch eine raumsparende Relativanordnung zwischen der Anschlussbasis und mindestens zwei Filterpatronen.

In einer bevorzugten Ausführungsform sind der Patroneneinlass einer Filterpatrone und ein zugeordneter Zuleitungskanal koaxial angeordnet. Diese Relativanordnung erleichtert eine einfache Montage der Filterpatronen an der Anschlussbasis. Insbesondere sind die Filterpatronen in derselben Weise an der Anschlussbasis montierbar wie herkömmlich eine einzelne Filterpatrone unmittelbar an der Funktionsschnittstelle. Dies unterstützt eine montagefreundliche Handhabung der Anschlussbasis.

Vorzugsweise ist der zentrale Zuleitungsabschnitt der Anschlussbasis Bestandteil eines rohrartigen Anschlussstückes, welches kostengünstig bereitgestellt werden kann.

Vorteilhaft ist das Anschlussstück von mindestens einer Mündungsöffnung (z.B. eine ringspaltartige Öffnung oder mehrere Öffnungen) durchsetzt und von einem die Zuleitungskanäle enthaltenden Basiskörper umgeben, wobei die Zuleitungskanäle über die mindestens eine Mündungsöffnung des Anschlussstückes mit dem Basiseinlass fluidisch verbunden sind. Diese Ausgestaltung unterstützt einen konstruktiv einfachen Aufbau der Anschlussbasis. Insbesondere kann hierdurch die Anschlussbasis baukastenartig aus einzelnen einfach zu fertigenden Bestandteilen zusammengesetzt werden.

Vorzugsweise sind bei einem derartigen baukastenartigen Aufbau das Anschlussstück und der Basiskörper miteinander lösbar verbunden. Dies erleichtert die Handhabung der Anschlussbasis bei Wartungs- oder Reparaturarbeiten.

In einer weiteren bevorzugten Ausführungsform sind das Anschlussstück und der Basiskörper konzentrisch zueinander angeordnet und relativ zueinander verdrehbar. Dies unterstützt eine montagefreundliche Handhabung der einzelnen Bestandteile der Anschlussbasis als auch deren Montage bzw. Demontage. Außerdem lässt die relative Verdrehbarkeit zwischen dem Anschlussstück und dem Basiskörper eine Ausrichtung des Basiskörpers und somit der daran angeschlossenen Filterpatronen abhängig von der jeweils vorteilhaftesten Raumposition zu.

Vorzugsweise ist während der Montage der Filteranordnung an einer Funktionsschnittstelle eine eingestellte Relativposition, insbesondere Drehposition, zwischen dem Anschlussstück und dem Basiskörper arretierbar. Diese Arretierung ist insbesondere wieder lösbar, um eine einfache Demontage der Filteranordnung von der Funktionsschnittstelle zu erleichtern.

Die erfindungsgemäße Filteranordnung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine Seitenansicht einer erfindungsgemäßen Filteranordnung,
- Fig. 2: eine teilweise Seitenansicht einer Filterpatrone,
- Fig. 3: eine Seitenansicht der an eine Funktionsschnittstelle fluidisch angeschlossenen Filteranordnung gemäß Fig. 1,
- Fig. 4: eine Seitenansicht einer an die Funktionsschnittstelle gemäß Fig. 3 fluidisch angeschlossenen Filterpatrone entsprechend dem Stand der Technik, und
- Fig. 5: eine vergrößerte Seitenansicht der Montagestellung der Filteranordnung gemäß Fig. 3 mit Darstellung einzelner Details.

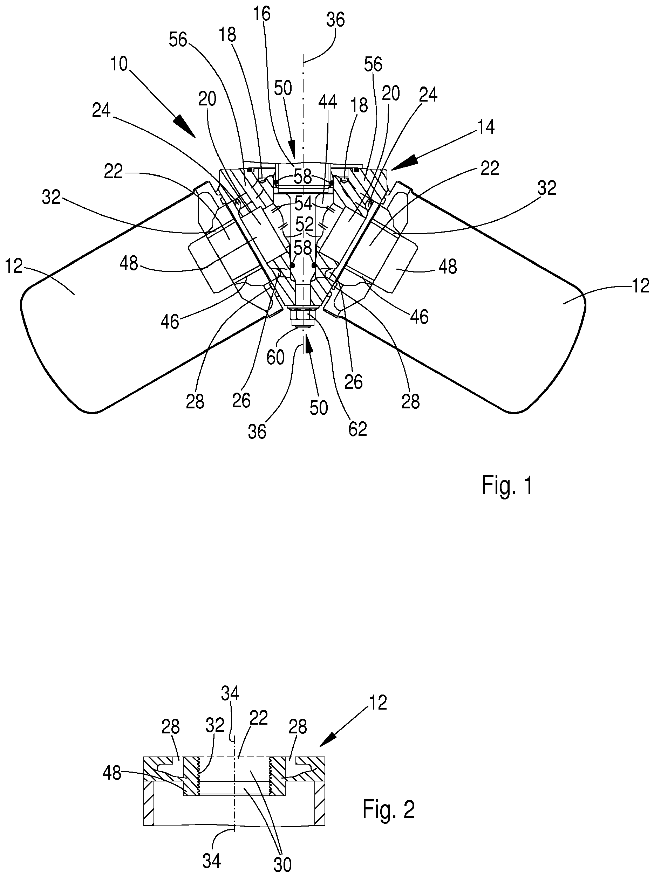

Fig. 1 zeigt eine erfindungsgemäße Filteranordnung 10. Sie enthält zwei herkömmliche Filterpatronen 12. In weiteren Ausführungsformen können auch mehr als zwei Filterpatronen 12 vorgesehen sein. Die Filteranordnung 10 enthält weiterhin eine Anschlussbasis 14, welche einen Basiseinlass 16 und einen Basisauslass 18 aufweist. Der Basiseinlass 16 ist mit Zuleitungskanälen 20 fluidisch verbunden. Über diese Zuleitungskanäle 20 wird ein zu filterndes Fluid, insbesondere Kraftstoff, zu einem Patroneneinlass 22 jeder Filterpatrone 12 geleitet. Der Basisauslass ist zweigeteilt und mündet in zwei Ableitungskanäle 24. Jeder Ableitungskanal 24 ist mit einem weiteren Ableitungskanal 26 auf hier nicht näher dargestellte Weise fluidisch verbunden. Jeder Ableitungskanal 24 bzw. 26 ist an einen Patronenauslass 28 der Filterpatronen 12 fluidisch angeschlossen. Über diese Patronenauslässe 28 wird das gefilterte Fluid abgeleitet.

Die Anordnung des Patroneneinlasses 22 und der Patronenauslässe 28 ist anhand der geschnittenen Teildarstellung der Filterpatrone 12 gemäß Fig. 2 gut erkennbar. Der Patroneneinlass 22 ist Bestandteil eines hohlzylindrischen Aufnahmeraumes 30, der an seiner Wandung axial zumindest abschnittsweise ein Patroneninnengewinde 32 aufweist. Das Patroneninnengewinde 32 dient der Montage der Filterpatrone 12 für den Betriebseinsatz. In Fig. 2 erstreckt sich das Patroneninnengewinde 32 axial bis zu einem Anschlussring 48. In weiteren Ausführungsformen kann der Anschlussring 48 auch ohne ein Innengewinde ausgestaltet sein, so dass sich das Patroneninnengewinde 32 axial außerhalb des Anschlussringes 48 erstreckt.

Es sei angemerkt, dass mit einem Basisauslass 18 auch mehrere Basisauslässe 18 gemeint sein können. Ebenso können mit einem Patronenauslass 28 auch mehrere Patronenauslässe 28 gemeint sein.

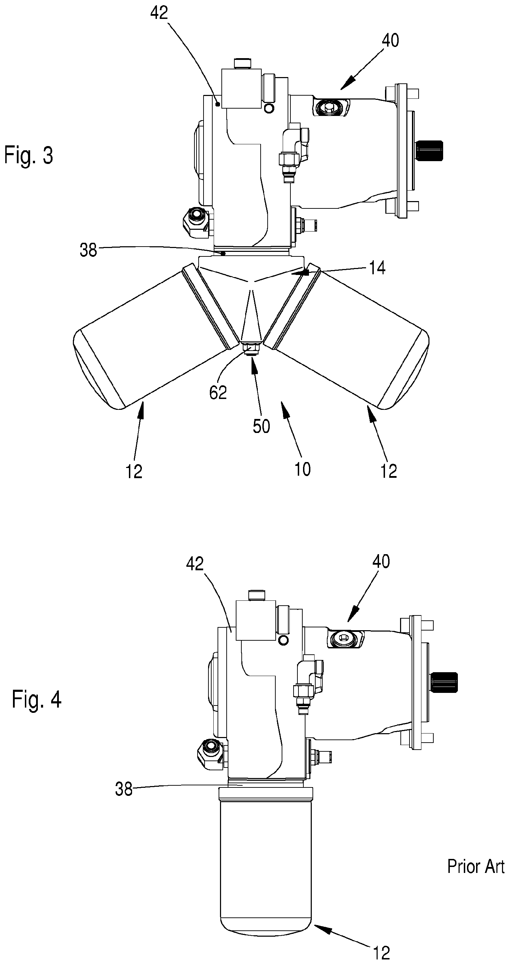

Der Patroneneinlass 22 ist konzentrisch zu einer Mittellängsachse 34 der Filterpatrone 12 angeordnet. Der Basiseinlass 16 ist konzentrisch zu einer Mittellängsachse 36 der Anschlussbasis 14 angeordnet. Zumindest in einer quer zu den Mittellängsachsen 34, 36 verlaufenden Querschnittsebene sind der Basiseinlass 16 sowie der Basisauslass 18 einerseits und der Patroneneinlass 22 sowie der Patronenauslass 28 andererseits entsprechend, insbesondere gleichartig oder identisch, zueinander angeordnet und dimensioniert. Folglich weist die Anschlussbasis 14 mit dem Basiseinlass 16 und dem Basisauslass 18 eine fluidische Anschlussstruktur auf, welche der Anschlussstruktur der Filterpatrone 12 mit dem Patroneneinlass 22 und dem Patronenauslass 28 entspricht. Bezüglich der jeweiligen Mittellängsachse 34, 36 weisen der Basiseinlass 16 sowie der Basisauslass 18 einerseits und der Patroneneinlass 22 sowie der Patronenauslass 28 andererseits etwa gleiche Abstände und Abmessungen auf. Diese entsprechende oder identische Dimensionierung des Basiseinlasses 16 und des Basisauslasses 18 im Verhältnis zu dem Patroneneinlass 22 und dem Patronenauslass 28 führt dazu, dass die Anschlussbasis 14 mit mehreren herkömmlichen Filterpatronen 12 ohne zusätzliche technische Maßnahmen an eine Funktionsschnittstelle 38 (nachfolgend kurz Schnittstelle 38) fluidisch anschließbar ist, welche herkömmlich nur für eine einzige Filterpatrone 12 geeignet ist. Hierdurch kann an der Schnittstelle 38 mit Hilfe der als Adapter wirksamen Anschlussbasis 14 wahlweise die Filteranordnung 10 mit mehreren Filterpatronen 12 (Fig. 3) oder eine einzelne Filterpatrone 12 (Fig. 4) fluidisch angeschlossen werden.

Anhand von Fig. 3 und Fig. 4 sei noch erwähnt, dass die fluidische Schnittstelle 38 im beschriebenen Ausführungsbeispiel Bestandteil einer an sich bekannten und deshalb nicht näher erläuterten Kraftstoff-Pumpe 40 (nachfolgend kurz Pumpe 40) ist und an einem Pumpengehäuse 42 angeordnet ist. Vorzugsweise fördert die Pumpe 10 Kraftstoff von einer Kraftstoffquelle zu einem technischen Gerät, um dieses mit gefiltertem Kraftstoff zu versorgen. Wie bereits erwähnt, ist zur Filterung herkömmlich eine einzelne Filterpatrone 12 an der Schnittstelle 38 montiert, insbesondere mittels des Patroneninnengewindes 32 angeschraubt. Diese einzelne Filterpatrone 12 lässt sich bedarfsweise bzw. wahlweise gegen zwei oder mehr als zwei Filterpatronen 12 austauschen, indem die Anschlussbasis 14 für eine entsprechende Anzahl von Filterpatronen 12 als Adapter verwendet wird.

Nachfolgend wird der Aufbau der Anschlussbasis 14 anhand von Fig. 1 erläutert. Der Basiseinlass 16 ist Bestandteil eines zentralen Zuleitungsabschnittes 44, welcher in zwei symmetrisch angeordnete Zuleitungskanäle 20 mündet. Dabei sind der zentrale Zuleitungsabschnitt 44 und die beiden abzweigenden Zuleitungskanäle 20 nach Art eines Y-Verteilers raumsparend angeordnet. Die Zuleitungskanäle 20 weisen jeweils ein Kanalaußengewinde 46 auf, welches mit dem Patroneninnengewinde 32 korrespondiert.

Mit diesen konstruktiv-geometrischen Merkmalen an der Anschlussbasis 14 kann die Filterpatrone 12 in der gleichen Weise an der Anschlussbasis 14 montiert werden wie herkömmlich an der Schnittstelle 38 einer technischen Vorrichtung gemäß Fig. 4.

Der zentrale Zuleitungsabschnitt 44 ist Bestandteil eines rohrartigen Anschlussstückes 50, dessen Mittellängsachse der Mittellängsachse 36 entspricht. Das Anschlussstück 50 ist von einer Vielzahl von Mündungsöffnungen 52 durchsetzt. Gemeinsam bilden sie einen Ringspalt, der von mehreren Stegen 54 unterbrochen ist. Über die Mündungsöffnungen 52 bzw. die ringspaltartige Mündungsöffnung 52 sind die Zuleitungskanäle 20 mit dem Basiseinlass 16 fluidisch verbunden. Auf diese Weise kann eine baukastenartig aufgebaute Anschlussbasis 14 bereitgestellt werden mit dem rohrartigen Anschlussstück 50 und einem letzteres umgebenden Basiskörper 56. Der Basiskörper 56 enthält die Zuleitungskanäle 20 und die Ableitungskanäle 24, 26.

Das Anschlussstück 50 und der Basiskörper 56 sind miteinander lösbar verbunden. Während dieser Verbindung gewährleisten zwei als O-Ringe ausgebildete Dichtungsringe 58 eine Abdichtung im Bereich der Mündungsöffnung(en) 52. Die Dichtungsringe 58 unterstützen auch eine stabile Fixierung des Anschlussstückes 50 und des Basiskörpers 56 relativ zueinander. Das Anschlussstück 50 und der Basiskörper 56 sind im zusammengebauten Zustand konzentrisch zueinander angeordnet und relativ zueinander verdrehbar, so dass die Filterpatronen 12 unterschiedliche Raumpositionen bzw. unterschiedliche Drehpositionen relativ zum Anschlussstück 50 einnehmen können. An einem axialen Freiende weist das Anschlussstück 50 ein Außengewinde 60 auf, welches mit einer Gewindemutter 62 korrespondiert. Hierdurch kann eine gewünschte Drehposition zwischen dem Anschlussstück 50 und dem Basiskörper 56 lösbar arretiert werden.

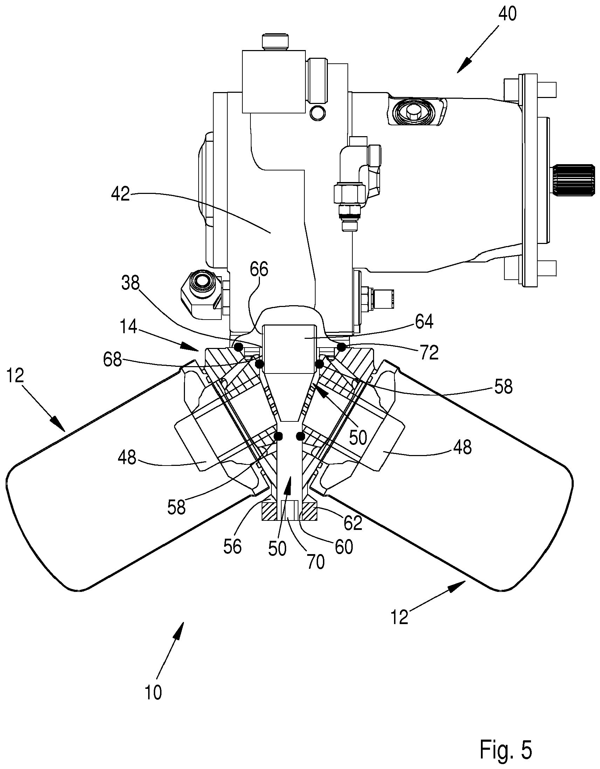

Der beschriebene Aufbau der Anschlussbasis 14 ermöglicht eine bedienungsfreundliche Montage der Filteranordnung 10 an der Schnittstelle 38 bei gleichzeitig erhöhter Filterleistung durch Verwendung mehrerer Filterpatronen 12. Dies wird nachfolgend anhand von Fig. 5 erläutert. Die Schnittstelle 38 weist einen rohrartigen Anschlussstutzen 64 auf, dessen Außenwand ein Stutzenaußengewinde 66 trägt. Dieses Stutzenaußengewinde 66 korrespondiert herkömmlich mit dem Patroneninnengewinde 32, um eine einzelne Filterpatrone 12 an der Schnittstelle 38 fluidisch anzuschließen.

Damit wahlweise auch die Anschlussbasis 14 ohne zusätzliche technische Maßnahmen an der Schnittstelle 38 fluidisch anschließbar ist, weist dessen Anschlussstück 50 ein mit dem Stutzenaußengewinde 66 korrespondierendes Anschlussinnengewinde 68 auf. Zunächst wird das Anschlussstück 50 mittels seines Anschlussinnengewindes 68 mit dem Stutzenaußengewinde 66 an der Schnittstelle 38 verschraubt. Zur Erleichterung des Schraubvorganges weist das dem Außengewinde 60 zugewandte Freiende des Anschlussstückes 50 einen Innenvielkant 70 (insbesondere Innensechskant) für ein entsprechendes Drehwerkzeug auf. Die Filterpatronen 12 werden über ihr Patroneninnengewinde 32 mit den Kanalaußengewinden 46 am Basiskörper 56 verschraubt. Danach wird der Basiskörper 56 entlang der Mittellängsachse 36 verschoben und dabei formschlüssig mit dem Anschlussstück 50 in Verbindung gebracht. Der Basiskörper 56 wird erforderlichenfalls relativ zum Anschlussstück 50 verdreht, bis die gewünschte Raumposition der Filterpatronen 12 eingestellt ist. Diese Relativposition zwischen dem Anschlussstück 50 und dem Basiskörper 56 wird mittels der Gewindemutter 62 lösbar arretiert. Hierdurch ist die Filteranordnung 10 in einer definierten Montagestellung. Dabei wird ein dichter Sitz zwischen dem Basiskörper 56 und der Schnittstelle 38 mittels eines Dichtungsringes 72 unterstützt. Dieser kann außerhalb der Montagestellung z.B. an der Schnittstelle 38 oder am Basiskörper 56 gelagert sein.

## Patentansprüche

1. Filteranordnung (10) zum fluidischen Anschluss an eine Funktionsschnittstelle (38), mit einer Anschlussbasis (14), welche einen Basiseinlass (16) und einen Basisauslass (18) aufweist, wobei
- der Basiseinlass (16) mit mindestens zwei abzweigenden Zuleitungskanälen (20) fluidisch verbunden ist zum Zuleiten eines Fluids zu Patroneneinlässen (22) mindestens zweier Filterpatronen (12), und
- der Basisauslass (18) mit Ableitungskanälen (24, 26) fluidisch verbunden ist zum Ableiten des Fluids aus Patronenauslässen (28) der Filterpatronen (12),
und wobei die Anschlussbasis (14) mit dem Basiseinlass (16) und dem Basisauslass (18) eine fluidische Anschlussstruktur entsprechend der Filterpatrone (12) mit dem Patroneneinlass (22) und dem Patronenauslass (28) aufweist derart, dass an der Funktionsschnittstelle (38) wahlweise die Anschlussbasis (14) oder eine Filterpatrone (12) fluidisch anschließbar ist, **dadurch gekennzeichnet, dass** der Basiseinlass (16) Bestandteil eines zentralen Zuleitungsabschnittes (44) der Anschlussbasis (14) ist, welcher in die mindestens zwei abzweigenden Zuleitungskanäle (20) mündet.

2. Filteranordnung nach Anspruch 1, **dadurch gekennzeichnet, dass** der zentrale Zuleitungsabschnitt (44) und zwei abzweigende Zuleitungskanäle (20) nach Art eines Y-Verteilers angeordnet sind.

3. Filteranordnung nach einem der vorhergehenden Ansprüche, **dadurch gekennzeichnet, dass** der Patroneneinlass (22) der Filterpatrone (12) und ein zugeordneter Zuleitungskanal (20) koaxial angeordnet sind.

4. Filteranordnung nach einem der vorhergehenden Ansprüche, **dadurch gekennzeichnet, dass** der zentrale Zuleitungsabschnitt (44) Bestandteil eines rohrartigen Anschlussstückes (50) ist.

5. Filteranordnung nach Anspruch 4, **dadurch gekennzeichnet, dass** das Anschlussstück (50) von mindestens einer Mündungsöffnung (52) durchsetzt ist und von einem die Zuleitungskanäle (20) enthaltenden Basiskörper (56) umgeben ist, wobei die Zuleitungskanäle (20) über die mindestens eine Mündungsöffnung (52) des Anschlussstückes (50) mit dem Basiseinlass (16) fluidisch verbunden sind.

6. Filteranordnung nach Anspruch 5, **dadurch gekennzeichnet, dass** das Anschlussstück (50) und der Basiskörper (56) miteinander lösbar verbunden sind.

7. Filteranordnung nach Anspruch 5 oder 6, **dadurch gekennzeichnet, dass** das Anschlussstück (50) und der Basiskörper (56) konzentrisch zueinander angeordnet und relativ zueinander verdrehbar sind.

8. Filteranordnung nach einem der Ansprüche 5 bis 7, **dadurch gekennzeichnet, dass** eine Relativposition zwischen dem Anschlussstück (50) und dem Basiskörper (56) arretierbar ist.

## Claims

1. Filter arrangement (10) for fluidic connection to a functional interface (38), having a connector base (14) which has a base inlet (16) and a base outlet (18),
- the base inlet (16) being connected fluidically to at least two branching feed line ducts (20) for feeding a fluid to cartridge inlets (22) of at least two filter cartridges (12), and
- the base outlet (18) being connected fluidically to discharge ducts (24, 26) for discharging the fluid from cartridge outlets (28) of the filter cartridges (12),
and the connector base (14) with the base inlet (16) and the base outlet (18) having a fluidic connector structure in accordance with the filter cartridge (12) to the cartridge inlet (22) and the cartridge outlet (28), in such a way that the connector base (14) or a filter cartridge (12) can be selectively connected fluidically at the functional interface (38), **characterized in that** the base inlet (16) is a constituent part of a central feed line section (44) of the connector base (14), which central feed line section (44) opens into the at least two branching feed line ducts (20).

2. Filter arrangement according to Claim 1, **characterized in that** the central feed line section (44) and two branching feed line ducts (20) are arranged in the manner of a Y-shaped distributor.

3. Filter arrangement according to either of the preceding claims, **characterized in that** the cartridge inlet (22) of the filter cartridge (12) and an associated feed line duct (20) are arranged coaxially.

4. Filter arrangement according to one of the preceding claims, **characterized in that** the central feed line section (44) is a constituent part of a tubular connector piece (50).

5. Filter arrangement according to Claim 4, **characterized in that** the connector piece (50) is penetrated by at least one orifice opening (52) and is surrounded by a base body (56) which contains the feed line ducts (20), the feed line ducts (20) being connected fluidically to the base inlet (16) via the at least one orifice opening (52) of the connector piece (50).

6. Filter arrangement according to Claim 5, **characterized in that** the connector piece (50) and the base body (56) are connected releasably to one another.

7. Filter arrangement according to Claim 5 or 6, **characterized in that** the connector piece (50) and the base body (56) are arranged concentrically with respect to one another and can be rotated relative to one another.

8. Filter arrangement according to one of Claims 5 to 7, **characterized in that** a relative position between the connector piece (50) and the base body (56) can be locked.

## Revendications

1. Système de filtre (10) pour le raccordement fluidique à une interface fonctionnelle (38), avec une base de raccordement (14), qui présente une entrée de base (16) et une sortie de base (18), dans lequel
- l'entrée de base (16) est fluidiquement raccordée à au moins deux canaux d'alimentation branchés (20) pour amener un fluide à des entrées de cartouche (22) d'au moins deux cartouches de filtre (12), et
- la sortie de base (18) est fluidiquement raccordée à des canaux d'évacuation (24, 26) pour évacuer le fluide hors de sorties de cartouche (28) des cartouches de filtre (12),
et dans lequel la base de raccordement (14) avec l'entrée de base (16) et la sortie de base (18) présente une structure de raccordement fluidique correspondant à la cartouche de filtre (12) avec l'entrée de cartouche (22) et la sortie de cartouche (28), de telle manière que la base de raccordement (14) ou une cartouche de filtre (12) puisse au choix être raccordée à l'interface fonctionnelle (38), **caractérisé en ce que** l'entrée de base (16) est un composant d'une partie de conduite d'alimentation centrale (44) de la base de raccordement (14), qui débouche dans lesdits au moins deux canaux d'alimentation branchés (20).

2. Système de filtre selon la revendication 1, **caractérisé en ce que** la partie de conduite d'alimentation centrale (44) et deux canaux d'alimentation branchés (20) sont disposés à la manière d'un répartiteur en Y.

3. Système de filtre selon l'une quelconque des revendications précédentes, **caractérisé en ce que** l'entrée de cartouche (22) de la cartouche de filtre (12) et un canal d'alimentation associé (20) sont disposés de façon coaxiale.

4. Système de filtre selon l'une quelconque des revendications précédentes, **caractérisé en ce que** la partie de conduite d'alimentation centrale (44) est un composant d'une pièce de raccordement tubulaire (50).

5. Système de filtre selon la revendication 4, **caractérisé en ce que** la pièce de raccordement (50) est percée par au moins une ouverture d'embouchure (52) et est entourée par un corps de base (56) contenant les canaux d'alimentation (20), dans lequel les canaux d'alimentation (20) sont fluidiquement raccordés à l'entrée de base (16) au moyen de ladite au moins une ouverture d'embouchure (52) de la pièce de raccordement (50) .

6. Système de filtre selon la revendication 5, **caractérisé en ce que** la pièce de raccordement (50) et le corps de base (56) sont assemblés l'un à l'autre de façon séparable.

7. Système de filtre selon une revendication 5 ou 6, **caractérisé en ce que** la pièce de raccordement (50) et le corps de base (56) sont disposés de façon concentrique l'un à l'autre et peuvent tourner l'un par rapport à l'autre.

8. Système de filtre selon l'une quelconque des revendications 5 à 7, **caractérisé en ce qu'**une position relative entre la pièce de raccordement (50) et le corps de base (56) peut être bloquée.
